# EUROPÄISCHE PATENTSCHRIFT

(11) **EP 4 007 910 B1**
(45) Veröffentlichungstag und Bekanntmachung des Hinweises auf die Patenterteilung: **07.10.2026**
(21) Anmeldenummer: 20751514.9
(22) Anmeldetag: 03.08.2020
(51) Int. Cl.: G01N 21/90, G01N 21/88

(54) **VERFAHREN UND VORRICHTUNG ZUR OPTISCHEN PRÜFUNG VON HOHLKÖRPERN**
METHOD AND DEVICE FOR OPTICALLY TESTING HOLLOW BODIES
PROCÉDÉ ET DISPOSITIF D'ESSAI OPTIQUE DE CORPS CREUX

(30) Priorität: 02.08.2019 CH 9802019
(43) Veröffentlichungstag der Anmeldung: 08.06.2022
(73) Patentinhaber: Finatec Holding AG, 2555 Brügg bei Biel (CH)
(72) Erfinder: HURNI, Michel, 2503 Biel/Bienne (CH); CHOQUARD, Pascal, 2555 Brügg (CH); SCHLUP, Beat, 4562 Biberist (CH); KLOCK, Hansjörg, 3076 Worb (CH)
(74) Vertreter: BOVARD AG
(86) Internationale Anmeldenummer: PCT/EP2020/071801
(87) Internationale Veröffentlichungsnummer: WO 2021/023706

(56) Entgegenhaltungen:
- EP-A1- 0 037 694
- EP-A2- 1 779 096
- EP-A2- 2 290 355
- DE-A1- 102017 201 776
- DE-B3- 102012 100 987
- JP-A- 2013 178 191
- JP-A- 2013 181 784
- JP-A- 2017 120 201
- US-A- 3 932 042
- US-A1- 2014 015 960
- US-A1- 2018 156 740
- US-A1- 2018 195 974
- US-A1- 2019 168 434

## Beschreibung

### Technisches Gebiet

Die vorliegende Erfindung betrifft ein Verfahren und eine Vorrichtung zur optischen Prüfung von Hohlkörpern, insbesondere Behältern wie Flaschen und Kanistern, aber auch technischen Objekten wie Behälterverschlüssen und/- oder Preformlingen zur Herstellung von Behältern. Insbesondere betrifft diese Erfindung ein Verfahren und eine Vorrichtung zur optischen Prüfung von Behältern, welche als Verpackungsartikel zur Aufnahme von Flüssigkeiten, Pasten, Cremes und/oder Stückgut, z.B. Tabletten, Dragees etc. geeignet sind. Ein zu prüfender Hohlkörper wird hierfür mittels einer Transporteinrichtung entlang einer Prüfstrecke gefördert. Dabei können die Hohlkörper bzw. Prüflinge sowohl in der Grösse, der Form, der Farbe, der Transparenz und/oder dem Material variieren und mehr oder weniger bedruckt und/ oder strukturiert sein.

### Stand der Technik

Im Bereich der Getränkeindustrie werden in zunehmendem Ausmass Behälter als Einwegflaschen aus Kunststoff eingesetzt, welche in hygienischer, logistischer und aus Kostengründen darüber hinaus auch im Chemie-, Pharmaund Kosmetikbereich eingesetzt werden. Entsprechende Kunststoffbehälter werden folglich in grossen Mengen benötigt und verwendet.

Im Allgemeinen umfasst die Herstellung von entsprechenden Behältern ein zweistufiges Verfahren, wobei zunächst ein Preformling erzeugt und anschliessend in einem Blas-Reck-Verfahren, einem Extrusionsblasformverfahren oder einem anderen geeigneten Verfahren auf seine volle Grösse aufgeweitet wird.

Bei der industriellen Fertigung ist eine zerstörungsfreie Prüfung der Preformlinge und/oder der Behälter hinlänglich bekannt, wobei jeder einzelne Prüfling einer Kontrolle unterzogen wird und aus der Kontrolle auch Korrekturen des Herstellungsprozesses der Preformlinge bzw. Behälter eingeleitet werden können. Demnach werden die Kontur, der Boden- und der Mündungsbereich der Behälter nicht nur hinsichtlich der Dimensionen, sondern auch auf Butzen, d.h. Materialränder, Kontaminationen, Materialeinschlüsse, Löcher und Dünnstellen etc. geprüft, um den hohen Qualitätsanforderungen zu genügen. Die Prüflinge sind dabei insbesondere Kunststoffbehälter aus PET, PE, HD-PE und/oder PP mit gleichmässigen und/oder strukturierten Bereichen und transparent und/oder opak, welche sortiert oder auch unsortiert der Qualitätskontrolle zu unterwerfen sind.

In bekannten optischen Prüfverfahren werden typischerweise eine Transportvorrichtung zum Transport der Prüflinge durch ein komplexes Prüfsystem eingesetzt, das eine oder mehrere entsprechend positionierte Kameras und angepasste Beleuchtungsmittel sowie spezielle Bildverarbeitungsprozessoren umfasst. Die Kameras nehmen statische oder dynamische Bilder der zu prüfenden Behälter auf, welche in dem Bildverarbeitungsprozessor unter Verwendung besonderer Prüfalgorithmen ausgewertet werden, um anhand der gelieferten Bilder und vorgegebenen Qualitätsstandards Defekte an den zu prüfenden Behältern zu detektieren. Neben der vollumfänglichen Prüfung spielt auch die Prüfgeschwindigkeit eine äusserst wichtige Rolle, um ein effektives Verfahren bereitzustellen.

Die zu prüfenden Behälter-Hohlkörper sind dreidimensionale Objekte mit häufig unterschiedlichen Formen und Oberflächenerscheinungen, umfassend eine gesamte Seitenwandfläche sowie einen unteren Boden und einen oberen Hals- bzw. Mündungsbereich. Für eine vollumfängliche Prüfung des zu prüfenden Behälters ist eine Auswertung aller Inspektionszonen anhand von Bildern aller Abbildungsbereiche erforderlich. Hierfür ist bekannt, den Prüfling relativ zu mindestens einer Kamera zu bewegen, z.B. zu drehen, oder mehrere Kameras aus unterschiedlichen Blickrichtungen mit einem überlappenden Sichtfeld einzusetzen. Die Prüfung aller Inspektionszonen an einem Behälter erfordert entsprechend viele Aufnahmen und ist entsprechend aufwendig.

Ein Verfahren zur optischen Prüfung von Hohlkörpern muss berücksichtigen, ob der zu prüfende Hohlkörper zumindest partiell lichtdurchlässig ist, d.h. transluzent bzw. transparent, oder lichtundurchlässig, d.h. opak, so dass im Allgemeinen eine der optischen Prüfung vorangestellte Sortierung erforderlich ist. Um opake und transparente Hohlkörper auf einer Anlage prüfen zu können, sind ansonsten mehrere in Serie angeordnete Kameras erforderlich, so dass eine derartige Anlage entsprechend kostenintensiv und komplex ist.

Aus DE 10 2012 100987 B3 ist ein Verfahren und Vorrichtung bekannt, um mittels eines schaltbaren optischen Elements zwischen einem Bildaufnehmer und einem zu inspizierenden Objekt, dieses wahlweise im Durchlicht- und im Auflichtverfahren zu prüfen.

Aus EP 2 290 355 A2 ist ein Verfahren und eine Vorrichtung zur optischen Inspektion von etikettierten Behältern bekannt, wobei das Etikett im Auflicht- und im Durchlichtverfahren prüfbar ist.

Aus US2018/195974 A1 ist ein Verfahren und eine Vorrichtung zur Inspektion von Etiketten auf Behältern vorgesehen, wobei das Objekt in einer Inspektionskuppel mit reflektierenden Innenflächen beleuchtet ist und mehrere angeordnete Kameras getaktet geschaltet werden.

Aus EP 1 779 096 B1 ist ein Verfahren und eine Vorrichtung zur Erfassung einer Fremdsubstanz in einem mit Flüssigkeit gefüllten Behälter bekannt, wobei mehrere Kameras und Lichtquellen wechselweise schaltbar sind.

US 2019/0168434 A1 betrifft ein optisches Inspektionssystem und ein Verfahren zur Prüfung von Hohlkörpern, insbesondere von Preforms, wobei die Preforms während der Inspektion ihre relative Position zueinander beibehalten, um eine Zuordnung zu einzelnen Formkavitäten zu ermöglichen. Die Inspektion erfolgt mittels mindestens einer Kamera, die typischerweise als digitale Flächen- (Matrix-)kamera ausgeführt ist und relativ zu den Preforms bewegt wird, um verschiedene Oberflächenbereiche, insbesondere Mündungs- und Gewinderegionen, zu erfassen. Zusätzlich offenbart D3, dass die Kameraeinrichtung alternativ auch als Zeilenkamera ausgebildet sein kann, wobei ein zweidimensionales Bild durch die Relativbewegung zwischen Kamera und Preform aus einer Sequenz von Zeilenaufnahmen aufgebaut wird.

### Zusammenfassung der Erfindung

Es ist Aufgabe der vorliegenden Erfindung, ein neues Verfahren und eine neue Vorrichtung zur optischen Prüfung von Hohlkörpern vorzuschlagen, welche nicht die Nachteile des Standes der Technik aufweisen. Insbesondere ist eine Aufgabe der vorliegenden Erfindung, ein neues Verfahren und eine neue Vorrichtung zur optischen Prüfung von Hohlkörpern vorzuschlagen, welche eine schnelle, präzise, effiziente und zuverlässige, sowie flexible Prüfung des gesamten Hohlkörpers ermöglicht. Dabei können die zu prüfenden Hohlkörper in mannigfacher Weise in ihren Merkmalen variieren. Insbesondere sollte das Verfahren und die Vorrichtung Flexibilität hinsichtlich eines einfachen und schnellen Wechsels zwischen einer Prüfung im Auflicht und/oder im Durchlicht gewährleisten.

Gemäss der Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Diese Ziele der Erfindung werden durch ein Verfahren zur optischen Prüfung von Hohlkörpern erreicht, in welchem ein Hohlkörper mittels einer Transporteinrichtung befördert wird, insbesondere entlang einer Transportrichtung, mit einer Transportgeschwindigkeit, wobei mittels einer Inspektionseinheit, umfassend eine Kameraeinheit und eine Beleuchtungseinheit, ein Abbild von einer Seitenwandfläche des Hohlkörpers sowie eines Boden- und Mündungsbereichs erzeugt wird. Vorgesehen ist, dass mehrere Inspektionseinheiten angeordnet und nacheinander aktivierbar sind, so dass ein Inspektionsvolumen aufspannbar ist, in welchem ein Abbild der gesamten Seitenwandfläche des Hohlkörpers in einem Durchlichtverfahren, einem Auflichtverfahren und/oder einem Dunkellichtverfahren erzeugt wird, wobei jeweils eine Kameraeinheit der Inspektionseinheiten eingerichtet ist, um eine serielle Abfolge von Aufnahmen in jeweils einer Zeitspanne aufzunehmen, welche bei einer gegebenen Transportgeschwindigkeit eine Strecke ausmacht, welche einem Bruchteil der Behältergrösse entspricht.

Mittels der Transporteinrichtung wird der Hohlkörper befördert, insbesondere an einer oder mehrerer Inspektionseinheiten vorbei bewegt, so dass eine Relativbewegung zwischen dem Prüfling und jeweiliger Inspektionseinheit vorliegt. In einer Ausführungsform wird die Relativbewegung auch dann erreicht, wenn sich die jeweilige Inspektionseinheit relativ zum Prüfling bewegt, bzw. bewegt wird und/oder der Prüfling bewegt oder bewegt wird.

Eine optische Prüfung des Hohlkörpers kann nach der Herstellung, oder nach einer Reinigung eines wiederverwertbaren Hohlkörpers erfolgen. Dabei ist vorgesehen, dass das Verfahren zur optischen Prüfung ein Durchlicht-, Dunkelfeldund/oder Auflichtverfahren ist.

Die Prüflinge können neben zylindrischen und nicht-zylindrischen Hohlkörpern mit einer Öffnung und einer gegenüberliegenden Bodenfläche, auch Dosen und/oder Tuben sein, insbesondere aus Kunststoff, z.B. PET, PE, HD-PE oder PP oder einem biologisch abbaubaren Material. Derartige Behälter sind vorgesehen, um Getränke und/oder Lebensmittel, Hygieneartikel, Pasten, Medikamente, bzw. chemische, biologische und/oder pharmazeutische Produkte, aufzunehmen. Als Behälter werden folglich auch Teile, Kavitäten, Flaschen, Gefässe oder auch Gefässeinrichtungen betrachtet. Ebenfalls unter den Umfang der Erfindung fallen Behälterverschlüsse und Preformlinge zur Herstellung von Behältern.

Zur Erzeugung von geeigneten Abbildinformationen zur vollumfänglichen Prüfung des zu prüfenden Hohlkörpers sind erfindungsgemäss mehrere nacheinander aktivierbare Inspektionseinheiten vorgesehen, wobei eine Inspektionseinheit in einer Anordnung zumindest eine Kameraeinheit, eine Beleuchtungseinheit und gemäss einer Ausführungsform Filterelemente umfasst. Die Kameraeinheit ist als eine Zeilenkamera ausgebildet, welche insbesondere geeignet ist zur Abbildung runder Körper ohne perspektivische Verzerrung. In einer Ausführungsform ist die als Zeilenkamera ausgebildete Kameraeinheit derart ausgerichtet, dass die Längsachse der Zeilenkamera parallel zur Längsachse des Hohlkörpers gerichtet ist. Die Breite des Sensors bzw. Sensoren der Zeilenkamera kann mindestens gleich der Länge des Hohlkörpers sein. Alternativ kann durch eine Verfahrbewegung der Kameraeinheit oder durch Zoomen ein "volles" zweidimensionales Bild erzielt werden.

Die Kameraeinheit ist konfiguriert, um Licht, bevorzugt ausgewählter Wellenlängenbereiche, zu detektieren und zeilen- bzw. spaltenweise Bildaufnahmen zu erstellen. Eine Zeilenkamera mit mehreren Zeilen bzw. Spalten kann eingesetzt werden, um eine hohe Bildwiederholungsrate zu erreichen. Durch einen definierten, der Zeilenkamera zugänglichen Beobachtungsbereich in Zusammenhang mit dem zu prüfenden Hohlkörper weist diese eine hohe Ortsauflösung auf. Bei einem an den mehreren Inspektionseinheiten vorbei bewegten Objekt nimmt die jeweilige Zeilenkamera oder ein Zeilenkamerasystem eine Abfolge von zeilen- bzw. spaltenförmigen Bildaufnahmen des Hohlkörpers im Inspektionsvolumen auf, welche in einer zugeordneten Verarbeitungseinheit bzw. Bearbeitungsprozessor dynamisch zusammengefügt und mit der Bewegung des zu untersuchenden Objekts synchronisiert werden. Auf Basis der ermittelten Abbildinformation ist eine Analyse der gesamten Seitenwandfläche des prüfenden Hohlkörpers ableitbar. Die Abbildinformationen bzw. die elektronischen Bilddateien können beispielsweise mit hinterlegten Bezugsdateien verglichen werden.

Neben einer Kameraeinheit umfasst eine Inspektionseinheit eine geeignete Beleuchtungseinheit. Grundsätzlich ist eine geeignete Beleuchtungseinheit diejenige, welche beliebiges Licht mit einer beliebigen Wellenlänge und/oder einem beliebigen Spektralbereich abstrahlt. Demnach sind dynamische und/oder statische Beleuchtungseinheiten denkbar.

Bevorzugt strahlt die Beleuchtungseinheit lediglich Licht in einem vorbestimmbaren oder einstellbaren Spektralbereich ab. Hierfür kann die Beleuchtungseinheit ein oder mehrere Leuchtmittel umfassen, um punktförmig oder bevorzugt in eine oder zwei Raumrichtung/en ausgedehnt Licht zu emittieren. Besonders bevorzugt in Zusammenhang mit dem Einsatz von einer Zeilenkamera ist eine Beleuchtungseinheit, welche zur Beleuchtung eines Streifens in der Vertikalen ausgelegt ist, d.h. geeignet, um eine dünne hochfrequente Lichtlinie hoher Helligkeit zu erzeugen, d.h. um Licht in Form eines Lichtstreifens abgestimmt auf die Zeilenkamera und entsprechend der Länge des Hohlkörpers parallel zur Längsachse des Hohlkörpers zu emittieren.

Um eine möglichst variable optische Prüfung von Hohlkörpern zu ermöglichen, ist der Einsatz von Filterelementen und/oder Linsenelementen in der einzelnen Inspektionseinheit vorgesehen. Alternativ können aber auch Kameraeinheit und Beleuchtungseinheit entsprechend des oder der eingesetzten Lichtspektren, umfassend den gesamten sichtbaren Bereich, aufeinander abgestimmt sein.

In einer Ausführungsform ist in einer Inspektionseinheit ein Filterelement anordenbar, welches beispielsweise als ein Kollimator konfiguriert ist, um von der Beleuchtungseinheit abgestrahlte Lichtstrahlen zumindest in einer Raumrichtung parallel zueinander auszurichten, wobei sämtliche nicht in einem bestimmten Winkel verlaufende Lichtstrahlen absorbiert werden.

Bevorzugt ist das Filterelement ein Polarisationsfilter. Demnach ist in einer Ausführungsform ein im Strahlengang des austretenden Lichts angeordneter Polarisationsfilter eingerichtet, um nur für die Strahlung durchlässig zu sein, die in der entsprechenden Richtung transmittiert wird und um die Messwerterfassung beeinflussende Glanzeffekte zu eliminieren. Bevorzugt ist der Polarisationsfilter zwischen dem zu prüfenden Hohlkörper und dem optischen Sensor der Kameraeinheit, angeordnet, so dass die Beleuchtungseinheit unpolarisiertes Licht zur Beleuchtung des Hohlkörpers ausstrahlen kann. Zusätzlich kann auch ein Polarisationsfilter zwischen der Beleuchtungseinheit und dem zu prüfenden Hohlkörper im Strahlengang des abgestrahlten Lichts vorgesehen sein. Ferner kann durch Phasenverschiebung oder Polarisationsdrehung im durch den Sensor der Kameraeinheit erfassten Licht mittels des Polarisationsfilters dieses auf eine zu detektierende Fehlstelle abgestimmt sein. Durch die Filterwirkung des Polarisationsfilters erreicht nur ein geringer Anteil der ursprünglich abgestrahlten Lichtmenge den Sensor oder die Sensoren der Kameraeinheit, so dass vorgesehen ist, dass die Beleuchtungseinheit eine hohe Lichtmenge ausstrahlt, um ein Rauschen zu minimieren. Darüber hinaus ist auch der Einsatz weiterer Filterelemente und/oder Objektive denkbar, beispielsweise Farbfilter.

Zur Inspektion eines Hohlkörpers sind in einer Ausführungsform der vorliegenden Erfindung die mehreren Inspektionseinheiten in zur Transporteinrichtung parallelen Ebenen derart zueinander angeordnet, dass die optischen Achsen der jeweiligen Inspektionseinheiten zueinander verwinkelt gerichtet sind. Dabei können sich die optischen Achsen der angeordneten Inspektionseinheiten in einem Winkel zwischen 75° und 105° kreuzen, bevorzugt in einem Winkel von etwa 90°. Vorzugsweise sind in einer Ausführungsform parallel zueinander und auf gegenüberliegenden Seiten der Transporteinrichtung jeweils zwei Inspektionseinheiten angeordnet und somit insgesamt vier Inspektionseinheiten, welche das Inspektionsvolumen aufspannen. Demnach liegen jeweils die optischen Achsen von zwei Inspektionseinheiten auf gegenüberliegenden Seiten der Transporteinrichtung auf einer Linie oder mit einem leichten Versatz entlang der Transportrichtung zueinander. Bevorzugt durchläuft der zu untersuchende Hohlkörper entlang der Transportrichtung den Kreuzungspunkt der optischen Achsen der bevorzugt vier angeordneten Inspektionseinheiten, welcher weitgehend mit dem Inspektionsvolumen zusammenfällt. Aber auch eine andere Anzahl und Anordnung von Inspektionseinheiten ist denkbar, so beispielsweise von drei Inspektionseinheiten, welche in Form eines Dreiecks angeordnet sind. Die Positionierung der Inspektionseinheiten ist in der Höhe, d.h. hinsichtlich des vertikalen Abstands zur Transporteinrichtung, variabel einstellbar, um an unterschiedliche Höhen der zu prüfenden Hohlkörper anpassbar zu sein. Ausserdem kann vorgesehen sein, dass zur Inspektion eines Hohlkörpers dieser im Inspektionsvolumen relativ zu den Inspektionseinheiten bewegt werden kann, beispielsweise dass er nicht nur translatorisch bewegt wird, sondern auch mittels geeigneter Mittel gedreht werden kann.

Das Verfahren zur optischen Prüfung kann sich auf einen Teilbereich des Hohlkörpers beziehen, beispielsweise den Halsbereich, einen eventuellen Gewindebereich, die Seitenwandfläche und/oder den Bodenbereich eines Behälters oder eines Preformlings.

Das erfindungsgemässe Verfahren gestattet eine Durchführung der optischen Prüfung, welche auf die Transluzenz des Hohlkörpers abgestimmt ist. So kann ein zumindest teilweise transluzenter oder gegenüber einer oder mehrerer spektraler Wellenlängen durchscheinender Hohlkörper im Durchlichtverfahren geprüft werden. Im letzteren Fall kann mittels des umfassten Polarisationsfilters in Kombination mit der Beleuchtungseinheit Licht mit einstellbarer spektraler Wellenlänge eingesetzt werden. Dabei werden die mehreren Inspektionseinheiten mit hoher Frequenz durch geeignete Steuermittel nacheinander aktiviert, so dass jeweils eine Kameraeinheit einer Inspektionseinheit das von der Beleuchtungseinheit einer entlang der optischen Achse gegenüberliegenden Inspektionseinheit abgestrahlte Licht nach Passieren des zu prüfenden Hohlkörpers detektiert. Für eine umfassende, beispielsweise Prüfung der gesamten Seitenfläche, d.h. eine Rundum-Seitenprüfung, ist vorgesehen, dass ein serielles Scannen bzw. Multiplexen durch die vorgesehenen Inspektionseinheiten mittels geeigneter Steuerung der Aktivierung erfolgt, so dass aus einer Vielzahl von Einzelaufnahmen ein Gesamtbild des zu prüfenden Hohlkörpers erzeugt werden kann. Mittels des erfindungsgemässen Verfahrens ist eine kompakte Bauform der Vorrichtung zur optischen Prüfung möglich, so dass deren Integration relativ zu bestehenden Komponenten möglich ist. Darüber hinaus wird vermieden, dass Beleuchtungsmittel einen störenden Einfluss auf die optische Prüfung ausüben, welcher ansonsten den Einsatz von Abschirmelementen erfordert. Um eine ganzheitliche Abtastung, d.h. Prüfung zu erzielen, ist es erforderlich, dass das Scannen, d.h. das Aufnehmen einer Vielzahl von Einzelbildern, mit einer um ein Vielfaches höheren Geschwindigkeit erfolgt als diejenigen, mit der sich der zu prüfende Behälter entlang der Transportrichtung bewegt.

Handelt es sich um einen Hohlkörper aus einem opaken Material kann im Auflichtverfahren bzw. im Reflexionsmodus geprüft werden. Hierfür ist das Verfahren gemäss der Erfindung eingerichtet, so dass das von einer Beleuchtungseinheit ausgehende Licht einer Inspektionseinheit nach Reflexion an der Oberfläche des zu prüfenden Hohlkörpers von der Kameraeinheit der gleichen Inspektionseinheit oder einer entsprechend geeignet angeordneten Kameraeinheit detektiert wird. Dabei kann die Kameraeinheit und Beleuchtungseinheit so zueinander positioniert und konfiguriert sein, dass z.B. die Zeilenkamera im Reflexionswinkel zu der von der Beleuchtungseinheit abgestrahlten Lichtlinie steht, welche beispielsweise mittels geeigneter Linsenelemente und/oder Reflektoren fokussierbar ist.

Bei einer optischen Prüfung gemäss einem Dunkelfeldverfahren ist die Kameraeinheit relativ zu der Beleuchtungseinheit derart positioniert, dass das von Defekten umgelenkte Licht von der Kameraeinheit detektierbar ist, so dass Defekte im Kamerabild heller als die Umgebung erscheinen.

Die mit dem Verfahren gemäss einer Ausführungsform der Erfindung durchführbare optische Inspektion eines Hohlkörpers in Rundumsicht der Seitenwandfläche, sowie des Bodens und des Mündungsbereichs detektiert Fehlstellen, wie Löcher, bzw. Nadellöcher, dünne und/oder dicke Wandstellen, Risse, Kratzer, Streifen, Bläschen und/oder nicht geschmolzene Stellen etc.

Dank dem Verfahren gemäss der Erfindung ist es möglich, mit mehreren Inspektionseinheiten ein verzerrungsfreies Abbild des zu prüfenden Hohlkörpers zu erzielen. Vergleichbar dem menschlichen Auge zeichnet, nach einem nicht beanspruchten Beispiel, eine Flächenkamera in Laufrichtung ein Bild mit einer perspektivischen Verzerrung auf, welches bei einer Auswertung zur Detektion von Fehlstellen negative Wirkung entfaltet. Dagegen entspricht eine von einer als Zeilenkamera ausgebildeten Kameraeinheit aufgenommene Abbildung der geraden, horizontalen Sicht ohne Verzerrung. Allerdings erscheinen die aufgenommenen Bilder einer Zeilenkamera für das menschliche Auge unnatürlich, insbesondere verzerrt, und weisen keine Tiefeninformation auf. Um dem entgegenzuwirken und eine optische Prüfung insbesondere kritischer Bereiche zu erleichtern, kann vorgesehen sein, die fehlende Tiefeninformation mit einer von einer Bildverarbeitung eingesetzten Software, mittels einer sogenannten Trapezverzerrung, zu simulieren. Dieser Art der Bearbeitung sind dahingehend Grenzen gesetzt, dass Informationen über die Geometrie des zu prüfenden Hohlkörpers nicht oder nur teilweise vorab bekannt sind.

Bei einer optischen Prüfung von Hohlkörpern, welche weitgehend darauf abgestimmt ist, Hohlkörper eines Typs und/oder einer Farbe zu prüfen, ergibt sich mit dem Verfahren gemäss einer vorteilhaften Ausführungsform der Vorteil, dass durch ein gesteuertes Multiplexing der Inspektionseinheiten der konstruktive Aufwand reduziert werden kann. Folglich ist ein Vorteil des beim Verfahren gemäss einer vorteilhaften Ausführungsform eingesetzten Multiplexing darin zu sehen, dass es sowohl bei der Prüfung für opake Objekte im Auflicht-Verfahren als auch für transparente Objekte im Durchlicht-Verfahren nicht erforderlich ist, Kameraeinheiten und/oder Beleuchtungseinheiten räumlich voneinander zu trennen und entsprechende Abschirmeinrichtungen vorzusehen. Kameraeinheit und Beleuchtungseinheit zusammengefasst zu einer Inspektionseinheit realisiert einen kompakten Aufbau.

Mit dem erfindungsgemässen Verfahren können mehrere Abbilder des zu prüfenden Hohlkörpers erzeugt werden, wobei der Hohlkörper entlang der Transportrichtung an den Inspektionseinheiten vorbeigeführt wird und wobei durch ein gesteuertes zeitliches Multiplexing zwischen den einzelnen Inspektionseinheiten, bzw. zwischen den einzelnen Kameraeinheiten und/oder Beleuchtungseinheiten, hin- und her geschaltet wird, um eine Mehrfachmessung zu ermöglichen. Der von den Kameraeinheiten und Beleuchtungseinheiten der mehreren Inspektionseinheiten gebildete Multiplex-Mechanismus ist mit hoher Geschwindigkeit, insbesondere mit einer Frequenz im kHz-Bereich, mittels geeigneter Steuerung aktivierbar. Die mittels des Verfahrens erhaltenen Bildinformationen können Auskunft über allgemeine Fehlstellen des Hohlkörpers geben, wobei die Position, die Grösse und/oder die Art der Fehlstelle auf dem Hohlkörper erfasst werden können.

Eine optische Prüfung eines Hohlkörpers, nämlich eines Behälters kann in den Bereichen Hals, Seitenwandfläche und/oder Boden durchgeführt werden, um dort eventuelle Fehlstellen oder Abweichungen von vorgegebenen Dimensionen, Formen oder Konturen zu ermitteln. Im Halsbereich sind insbesondere der Durchmesser, die Ovalität, aber auch die Ausbildung und Masshaltigkeit eines Gewindes in einem Gewindebereich zur mechanischen Verbindung mit einem Verschlussdeckel zu prüfen, um eventuell fehlgebildete Behälter aussortieren zu können. Im Bodenbereich sollten Flecken und/oder Einschlüsse von Fremdmaterial und Fehlstellen detektiert werden können. Die zu prüfende Kontur aber auch detektierte Löcher und/oder Dünnstellen auf der Seitenwandfläche ebenso wie Butzen, d.h. Materialränder, welche an Quetschkanten bei der Herstellung des Behälters sich ausbilden können, können zu einem Aussortieren des Behälters führen.

Zur vollumfänglichen optischen Prüfung eines Hohlkörpers kann das Verfahren und die Vorrichtung gemäss der Erfindung individuell erweitert werden, wobei je nach Wunsch und Bedarf Inspektionseinheiten gleichen Typs oder unterschiedlichen Typs ergänzt werden können. Einer der zu überprüfenden Teilbereiche eines Behälters ist z.B. der Halsbereich, welcher insbesondere hinsichtlich Innendurchmesser, Ovalität, Risse, Einschlüsse, Materialanhäufungen im Innendurchmesser und/oder der Weite der Dichtfläche zu inspizieren ist. Hierfür kann vorgesehen sein, dass eine weitere Inspektionseinheit parallel zur Längsachse des Behälters, insbesondere oberhalb der Transporteinrichtung angeordnet ist, so dass die Anordnung von Kameraeinheit und Beleuchtungseinheit eingerichtet ist, um ein Abbild des Halsbereichs zur weiteren Auswertung zu erzeugen.

Ferner können zur Prüfung eines Gewindebereichs eines Behälters weitere Inspektionseinheiten vorgesehen werden, welche eine Prüfung des Inneren und des Äusseren des Gewindebereichs ermöglichen. In einer Ausführungsform der Erfindung werden zwei oder mehrere Inspektionseinheiten, bzw. deren Kameraeinheiten derart angeordnet, dass die damit erzeugten Abbilder Bildinformationen von zu überprüfenden Parametern vermitteln. Diese Parameter eines Gewindebereichs sind beispielsweise ein Anroll-Aussendurchmesser, eine Ovalität, eine Gesamthöhe, eine Tiefe, eine Breite und/oder eine Neigung von Flächen. Zur Gewinde- und/oder Durchmesservermessung werden bevorzugt eine telezentrische Beleuchtung und/oder eine telezentrische Optik objektseitig eingesetzt, wodurch Abbildungsfehler verringert werden und ein Vergleich von Grössen unterschiedlicher Bereiche möglich ist. Mit anderen Worten ändert sich durch die eingesetzte Telezentrie der Abbildungsmassstab in der Tiefe des Bildfeldes nicht.

Eine weitere optische Prüfung bezieht sich neben der Kontrolle der Seitenwandfläche auch auf die Kontrolle der Kontur des zu prüfenden Hohlkörpers, wobei diese auf eventuell vorhandene Butzen und/oder Dünnstellen zu prüfen ist. Butzen, welche auch als Grat oder Anguss bezeichnet werden, entstehen bei bestimmten Herstellungsverfahren von Hohlkörpern, z.B. Kunststoffbehältern, insbesondere in Bereichen des Flaschen- oder Behälterhalses, am Boden und an der Nahtstelle zwischen den für die Herstellung verwendeten Werkzeughälften. Die Prüfung von Behältern umfasst folglich eine Inspektion der Kontur auf Butzen, häufig realisiert mittels Zeilenkameras. Zwar ist vorgesehen, dass die Butzen gleich beim Öffnen der Werkzeughälften abgeschert werden, doch dies gelingt nur teilweise, so dass eine Nachbearbeitung und Inspektion erforderlich sind. Insbesondere bei Behältern mit einem daran angeformten Henkel bzw. Griff sind vorstehende Butzen ein Ausschusskriterium. Die Inspektion kann in das Verfahren gemäss einer bevorzugten Ausführungsform integriert werden, wobei die Qualitätskontrolle mittels optischer Prüfung vorzugsweise mittels Hintergrundbeleuchtung erfolgt, so dass ein scharfer Kontrast zwischen Butzen und Kontur sichtbar wird. Hierfür ist vorgesehen, dass Beleuchtungseinheit und Kameraeinheit auf gegenüberliegenden Seiten des zu prüfenden Behälters angeordnet sind.

Eine Inspektion des Bodenbereichs kann vorgesehen sein, wobei hierfür der zu prüfende Hohlkörper von der Transporteinrichtung mittels entsprechend ausgebildeter Mittel, z.B. mittels Greifelemente, abgehoben bzw. aufnehmbar ist, so dass durch eine angeordnete Inspektionseinheit eine Prüfung der Bodenfläche auf Fremdmaterial, Fehl- bzw. Dünnstellen und Deformationen detektiert werden können.

Ein Verfahren gemäss einer Ausführungsform der Erfindung kann darüber hinaus noch dadurch ergänzt werden, dass eine Qualitätskontrolle des zu prüfenden Hohlkörpers mittels einer Infrarot-Inspektionseinheit erfolgt. Eine Infrarot-Inspektionseinheit umfasst eine IR-fähige Bildaufzeichnungseinheit, beispielsweise ein Mikrobolometer für mittlere und langwellige Infrarotstrahlung oder eine IR-Kamera mit geringer Belichtungszeit und hoher Wellenlängenspezifität. Durch die Verwendung von Infrarotlicht können Eigenschaften eines Materials sichtbar gemacht werden, welche sich von denjenigen unterscheiden, die im sichtbaren Licht nachweisbar sind. So zeigen verschiedene Kunststoffe bei Infrarotstrahlung ganz spezifische Absorptions- und Emissionseigenschaften sowie Reflexionsmuster. Zur optischen Prüfung von Hohlkörpern, aber auch zur Überprüfung eines vorhergehenden Herstellungsverfahrens und eines einhergehenden Abkühlungsprozesses, kann eine IR-Inspektionseinheit eingesetzt werden, um Aufschluss über insbesondere verdeckte Inhomogenität im Material des Hohlkörpers und Rückschlüsse auf den Herstellungsprozess und die dafür eingesetzten Werkzeugmittel zu geben.

Ferner kann vorgesehen sein, mittels einer Erwärmung des Prüflings durch Bestrahlung den mehr oder weniger gezielten Wärmeeintrag und seine Verteilung in dem Material mittels Thermografie zu erfassen und die erzeugten Bilddaten auszuwerten.

An dieser Stelle soll erwähnt werden, dass sich die vorliegende Erfindung neben dem beschriebenen erfindungsgemässen Verfahren zur optischen Prüfung auch auf eine entsprechende Vorrichtung zur optischen Prüfung von Hohlkörpern bezieht.

### Kurzbeschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt schematisch Darstellungen unterschiedlicher zu prüfender Behälter;
Figur 2 zeigt schematisch eine Seitensicht auf einen zu prüfenden Behälter;
Figur 3 zeigt schematisch eine Seitensicht einer ersten bevorzugten Ausführungsform einer Vorrichtung gemäss der vorliegenden Erfindung;
Figur 4 zeigt schematisch eine Aufsicht eines Bereichs der ersten bevorzugten Ausführungsform der Erfindung; und
Figur 5 zeigt schematisch eine Seitensicht einer zweiten bevorzugten Ausführungsform der vorliegenden Erfindung.

### Bevorzugte Ausführungsformen der Erfindung

In der nachfolgenden detaillierten Beschreibung der bevorzugten Ausführungsformen der Erfindung wird lediglich die Prüfung von Behältern gezeigt. Es soll aber angemerkt werden, dass sich die vorliegende Erfindung gleichsam auch auf die Prüfung von Behälterverschlüssen und/oder Preformlingen zur Herstellung von Behältern bezieht und dass die nachfolgende Beschreibung nicht einschränkend ausgelegt werden soll.

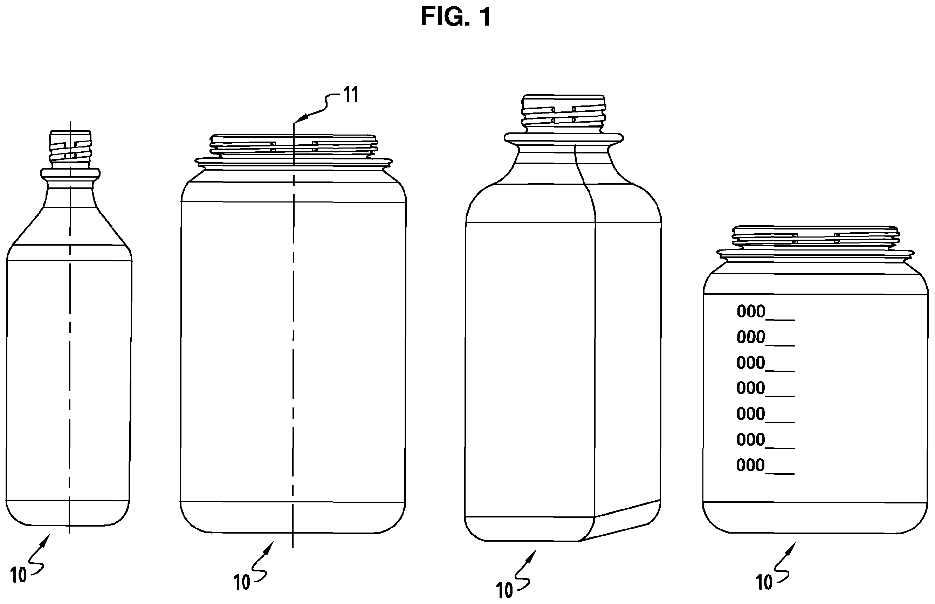

Figur 1 zeigt schematisch eine Vielzahl von Behältern 10, deren Integrität und Qualität mittels der vorliegenden Erfindung jeweils geprüft werden soll. Die dargestellten Behälter 10 unterscheiden sich gemäss Fig.1 nicht nur hinsichtlich ihrer Grösse und Form, d.h. ob sie einen runden, ovalen und/oder eckigen Querschnitt aufweisen, sondern auch dahingehend ob sie zumindest teilweise aus einem transparenten oder opaken Material gefertigt sind und ob sie eventuell zumindest an Seitenflächen Aufdrucke oder Etiketten aufweisen. Mit 11 wird eine Längsachse des Behälters 10 bezeichnet. Ferner können die zu prüfenden Behälter 10 auch Griffe, Henkel etc. umfassen, so dass ebenfalls ihre Kontur variieren kann. In Fig. 1 sind nun Behälter 10 dargestellt, welche weitgehend auch als Flaschen bezeichnet werden können. Die Vielzahl der zu prüfenden Behälter 10 kann aber auch Tuben, Dosen, Kanister oder andere Behältnisse umfassen, weitgehend bekannt aus dem Chemie-, Lebensmittel-, Kosmetik-, Pharmabereich.

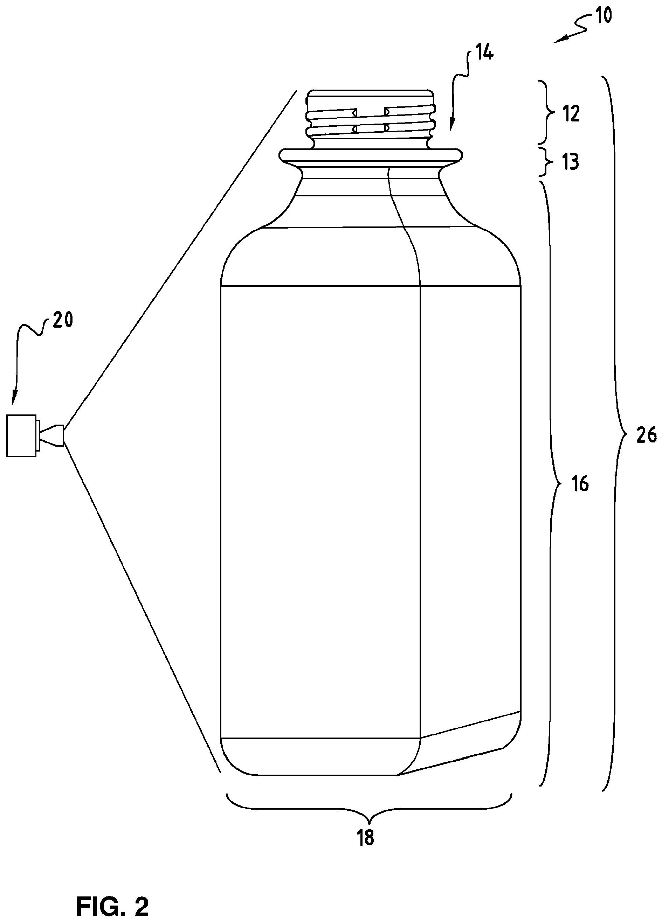

Fig. 2 zeigt beispielhaft an einer Grundform eines zu prüfenden Behälters 10 diejenigen Bereiche, welche einer Inspektion unterzogen werden können. Grundsätzlich umfasst ein Behälter 10 einen Halsbereich 14 eventuell mit einem Gewindebereich 12, einen Übergangsbereich 13, einen Körperbereich 16 und einen Bodenbereich 18. Das erfindungsgemässe Prüfverfahren und die erfindungsgemässe Prüfvorrichtung sind eingerichtet, um den Behälter 10 zu prüfen, d.h. zumindest die gesamte Seitenwandfläche 26 des Behälters 10, wie dies in Fig. 2 angedeutet ist durch eine schematisch dargestellte Kameraeinheit 20.

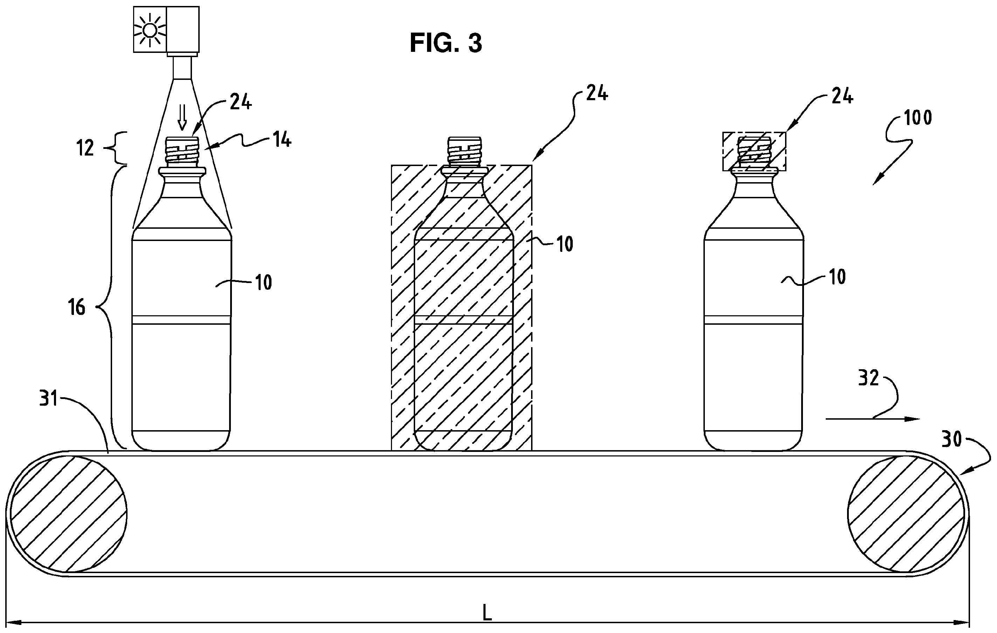

Figur 3 zeigt eine schematische Draufsicht einer ersten Ausführungsform einer Vorrichtung 100 zur optischen Prüfung von Behältern 10 gemäss der Erfindung, die zur Realisierung des Verfahrens gemäss einer bevorzugten Ausführungsform der Erfindung verwendet werden kann. Der zu prüfende Behälter 10 wird mittels einer Transporteinrichtung 30 in die Vorrichtung 100 befördert, wobei ein erstes bewegbares Förderband 31 vorgesehen ist, dessen Länge L derart gewählt ist, dass der Behälter 10 im Wesentlichen entlang der gesamten Länge der Vorrichtung 100 transportiert werden kann. Die Antriebsmittel zur Aktivierung der Transporteinrichtung 30 werden nur andeutungsweise durch Förderrollen dargestellt und nicht im Detail beschrieben. Ebenfalls nicht im Detail dargestellt sind eventuell anzuordnende Lichtschranken, welche die Beförderung des Behälters 10 verfolgt und zur Auslösung bestimmter Einheiten eingesetzt werden, sowie eine Messeinheit zur Bestimmung der Transportgeschwindigkeit des Behälters 10.

Der Behälter 10, welche entlang der Transportrichtung 32 in die Vorrichtung 100 eingeführt wird, gelangt nacheinander in Inspektionsvolumen 24, welche von noch näher zu erläuternder Inspektionseinheiten 40 aufgespannt werden. So ist in Fig. 3 dargestellt, dass der Behälter 10 zunächst einer optischen Prüfung durch eine oberhalb der Transporteinrichtung 30 angeordneten Inspektionseinheit 40 in dem entsprechend ausgebildeten Inspektionsvolumen 24 geprüft wird. Hierbei ist eine Prüfung einer im Halbereich 14 ausgebildeten Mündung möglich, insbesondere hinsichtlich Ovalität, und dem Inneren des Behälters 10 zumindest im Halsbereich 14.

In einem weiteren Inspektionsvolumen 24, aufgespannt durch insbesondere mehrere Inspektionseinheiten 40, welche seitlich der Transporteinrichtung 20 angeordnet sind (nicht dargestellt), wird vorzugsweise die gesamte Seitenwandfläche 24 des Behälters 10 einer optischen Prüfung unterzogen. Dabei richtet sich das eingesetzte Verfahren danach, ob der Behälter 10 zumindest teilweise transparent oder opak ist, so dass zwischen einem Durchlicht- und einem Auflichtverfahren variiert werden kann.

In einem weiteren Inspektionsvolumen 24, aufgespannt von entsprechend ausgebildeten Inspektionseinheiten 40, geeignet positioniert in Bezug auf den zu inspizierenden Bereich des Behälters 10, wird der Gewindebereich 12 des Behälters 10 geprüft, insbesondere hinsichtlich Anroll-Aussendurchmesser, Ovalität, Gesamthöhe, Tiefe, Breite und/oder Neigung von Flächen. Ebenfalls kann geprüft werden, ob sich im Gewindebereich Verschmutzungen und Defekte befinden.

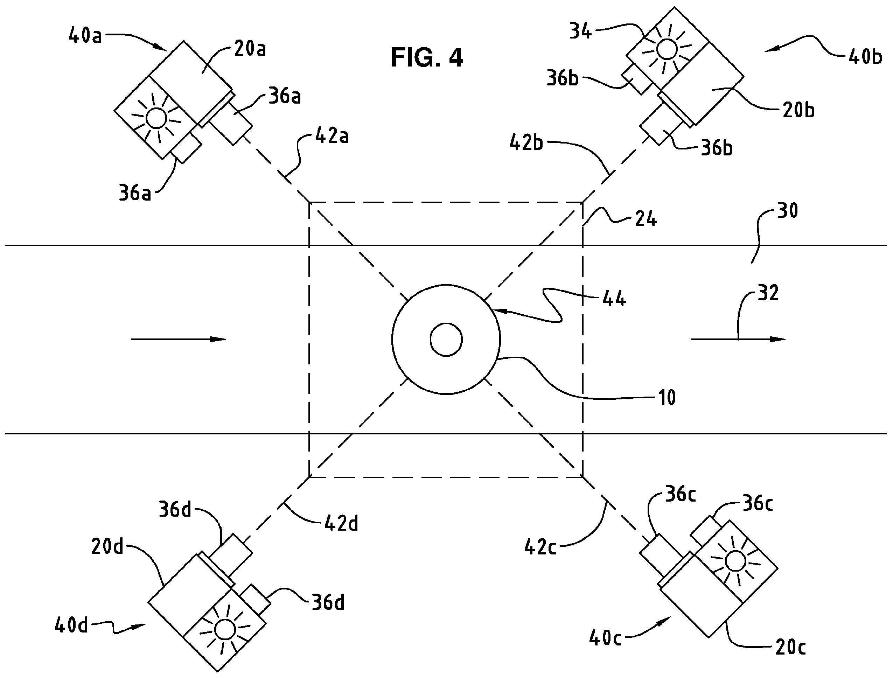

Fig. 4 stellt eine Aufsicht eines Bereichs der Vorrichtung 100 gemäss Fig. 3 dar. Dargestellt ist derjenige Bereich der Vorrichtung 100, welche zur Inspektion der gesamten Seitenwandfläche 26 des Behälters 10 eingerichtet ist. In der dargestellten Ausführungsform sind vier Inspektionseinheiten 40a, 40b, 40c, 40d dargestellt, welche jeweils eine Kameraeinheit 20a, 20b, 20c, 20d, eine Beleuchtungseinheit 34 bzw. 34a, 34b, 34c, 34d sowie Filterelemente 36 bzw. 36a, 36b, 36c, 36d, die sowohl an der Kameraeinheit 20 als auch bzw. sowie an der Beleuchtungseinheit 34 angeordnet sein können. Diese zu einer Anordnung, bezeichnet als Inspektionseinheit 40, zusammengefassten Elemente können an einem Führungsmechanismus beweglich aufgenommen sein, welcher die Form eines Schienensystems hat (nicht dargestellt). Der Führungsmechanismus kann über einen Antriebsmechanismus verfügen, mittels welchem die Inspektionseinheiten 40 und/oder die umfassten Elemente individuell translatorisch und/oder rotatorisch bewegt werden können, um eine Ausrichtung der jeweiligen Kameraeinheit 20 und/oder der Beleuchtungseinheit 34 in Bezug auf das Inspektionsvolumen 24 und/oder in Bezug zu weiteren Inspektionseinheiten 40 zu ermöglichen.

Wie in Fig. 4 dargestellt, wird das Inspektionsvolumen 24 von vier Inspektionseinheiten 40a, 40b, 40c, 40d gebildet, wobei sich jeweils zwei Inspektionseinheiten 40a, 40c und 40b, 40d gegenüberliegen, d.h. an gegenüberliegenden Seiten der Transporteinrichtung 30. So liegen optische Achsen 42a, 42c und 42b, 42d der jeweiligen Kameraeinheiten 20a, 20c und 20b, 20d weitgehend auf einer Linie. Die insgesamt vier optischen Achsen 42a, 42b, 42c, 42d kreuzen sich in einem Kreuzungspunkt, bzw. in einem Kreuzungsbereich 44 innerhalb des Inspektionsvolumens 24. Es ist jedoch auch möglich, eine Anordnung vorzusehen, bei welcher sich die einzelnen optischen Achsen 42a, 42b, 42c, 42d nicht alle in einem einzigen, sondern in mehreren relativ nahe beieinander stehenden Kreuzungspunkten treffen. Auf jeder der Seiten der Transporteinrichtung 30 stehen die optischen Achsen 42a und 42b bzw. 42c und 42d der Inspektionseinheiten 40a, 40b und 40c, 40d in einem Winkel zueinander, bevorzugt in einem Winkel von etwa 90°. Mittels dieser Anordnung der Inspektionseinheiten 40a, 40b, 40c, 40d kann ein in dem Inspektionsvolumen 24 befindlicher Behälter 10 sowohl im Durchlicht- als auch im Auflichtverfahren und im Dunkelfeldverfahren geprüft werden. Mit der Anordnung der Inspektionseinheiten 40 nebeneinander und parallel in Transportrichtung 32 ist es möglich, die gesamte Seitenwandfläche 26 des Behälters 10 aufzunehmen.

Gemäss einer Ausführungsform der Erfindung ist die Kameraeinheit 20 als eine Zeilenkamera ausgebildet, wobei die Länge eines Zeilensensors der Kameraeinheit 20 in etwa der Länge der Seitenwandfläche 26 des Behälters 10 anpassbar ist. Zeilenkameras haben den Vorteil, dass sie eine sehr hohe Abbildungsauflösung in einer Abbildungsrichtung und gleichzeitig eine sehr hohe Aufnahmegeschwindigkeit ermöglichen. Zur Erzeugung eines hochaufgelösten Abbilds der gesamten Seitenwandfläche 26 de Behälters 10, werden die von den Kameraeinheiten 20 aufgenommenen Bilder von einer speziellen Bildverarbeitungseinrichtung zusammengesetzt. Um möglichst aussagekräftige Bilder des zu prüfenden Behälters 10 aufnehmen zu können, umfasst die Vorrichtung 100 Beleuchtungseinheiten 34, welche beispielsweise statische Beleuchtungsmittel sein können, die konfiguriert sind, das gesamte Inspektionsvolumen 24 optimal zu beleuchten. In einer bevorzugten Ausführungsform weist jede der Inspektionseinheiten 40 eine Beleuchtungseinheit 34 auf, so dass diese in Bezug auf mindestens eine der Kameraeinheiten 20 in einer Anordnung vorgesehen ist, die einer Durchlichtkonfiguration und einer Auflichtkonfiguration entsprechen. Jede Beleuchtungseinheit 34 kann insbesondere eine herkömmliche sichtbare Lichtquelle sein, eine Infrarotlichtquelle, eine UV-Quelle, eine Laserquelle oder eine Kombination davon. Vorteilhaft ist die Beleuchtungseinheit 34 an die spezifische optische Prüfung anpassbar, welche an dem Behälter 10 durchzuführen ist. Ferner kann die Beleuchtungseinheit 34, welche mit den Kameraeinheiten 20 der Inspektionseinheit 40 direkt oder via eines geeigneten Mittels verbindbar ist, mit dieser mitbewegt werden oder individuell bewegbar sein, um eine optimale Beleuchtung eines von den Kameraeinheiten 20 abzubildenden Behälters 10 zu ermöglichen. Ebenfalls vorgesehen werden können weitere Beleuchtungsmittel (nicht dargestellt), welche sich jeweils im Wesentlichen leicht seitlich versetzt in Bezug auf die Achse zwischen den Kameraeinheiten 20 und dem zu prüfenden Behälter 10 befinden und für die Hintergrundbeleuchtung eingesetzt werden können. So kann bei eingeschalteter Kameraeinheit 20a die Hintergrundbeleuchtung auf der gegenüberliegenden Seite (also zwischen dem Behälter 10 und der Kameraeinheit 20c) verwendet werden.

Dank diesen verschiedenen Beleuchtungsmitteln ist es ebenfalls möglich, ein zeitliches Multiplexen verschiedener Beleuchtungstypen für jeweils eine Kameraeinheit zu verwenden. So kann z.B. alternierend eine Zeile mit Auflicht und dann eine Zeile mit Durchlicht aufgenommen werden und/oder zuerst eine Zeile mit sichtbarem Licht, gefolgt von einer Zeile mit Infrarot-Beleuchtung. Auch eine Abfolge von R-G-B-Aufnahmen ist auch denkbar. Auf diese Weise können mittels einer einzigen Kameraeinheit mehrere Bildtypen aufgenommen werden.

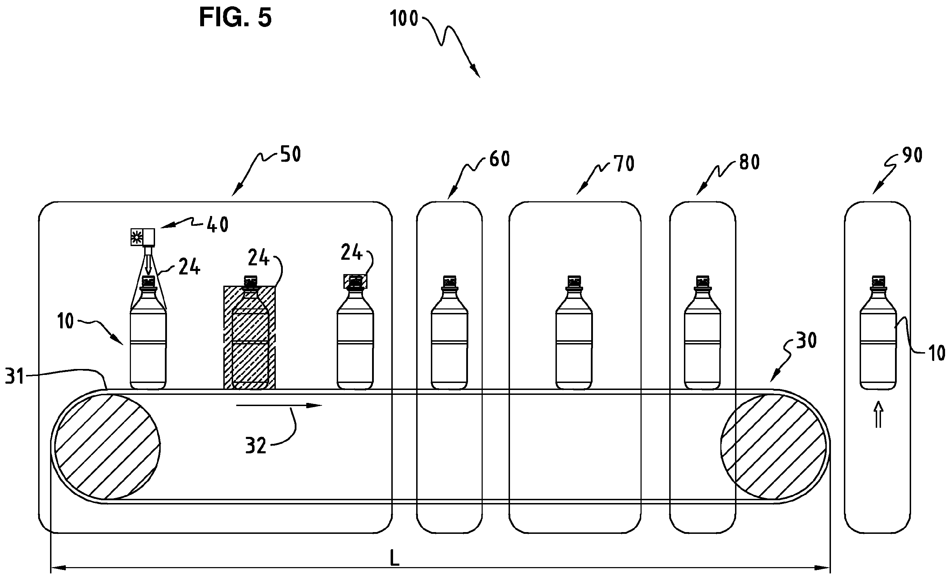

Figur 5 zeigt eine schematische Draufsicht auf eine Ausführungsform der Vorrichtung 100 gemäss der Erfindung. Dargestellt ist die Vorrichtung 100 zur Inspektion von Behältern 10, welche entlang der Transportrichtung 32 mittels einer Transporteinrichtung 30 gefördert werden und dabei mehrere Bereiche der Vorrichtung 100 durchlaufen, in welchen durch Inspektionseinheiten 40 Inspektionsvolumen 24 aufgespannt werden. Die Vorrichtung 100 umfasst mehrere Bereiche, wobei Bereich 50 bereits in Fig. 3 dargestellt wurde. Ein Bereich 60 der Vorrichtung 100 ist vorgesehen, um den Behälter 10 bzw. dessen Kontur auf sogenannte Butzen zu prüfen. Hierfür sind Beleuchtungseinheit 34 und Kameraeinheit 20 gegenüberliegend angeordnet, so dass der zu prüfende Behälter 10 sich zumindest zweitweise dazwischenliegend befindet. Durch eine optische Prüfung mit Hintergrundbeleuchtung, ausgehend von der Beleuchtungseinheit 34, sind die Kontur und die Butzen des zu prüfenden Behälters 10 klar voneinander unterscheidbar. Ferner ist ein Bereich 70 in der Fig. 5 dargestellt, welcher vorgesehen ist um die gesamte Seitenwandfläche 26 des Behälters 10 auf eventuell vorhandene Dünnstellen des Materials zu prüfen. Hierfür kann beispielsweise ein sogenanntes Dunkelfeldverfahren eingesetzt werden, wobei Kameraeinheit 20 und Beleuchtungseinheit 34 entsprechend aufeinander abgestimmt sind. Demnach ist die Kameraeinheit 20 relativ zu der Beleuchtungseinheit 34 derart positioniert, dass das von Defekten umgelenkte Licht von der Kameraeinheit 20 detektierbar ist.

Ein Bereich 80 der Vorrichtung 100 ist eingerichtet, um mittels Infrarotstrahlung den Behälter 10 zu prüfen, wobei eine Infrarot-Kameraeinheit und eine darauf abgestimmte IR-Beleuchtungseinheit vorgesehen sind. Mittels Infrarotstrahlung bzw. einer eingesetzten IR-Inspektionseinheit können durch die Änderungen im Adsorptions- bzw. Emissionsverhalten bei Inhomogenität im Material des Behälters 10 detektiert werden und möglicherweise, basierend darauf Rückschlüsse auf den Herstellungsprozess und die dafür eingesetzten Werkzeugmittel gezogen werden.

In einem mit 90 bezeichneten Bereich der Vorrichtung 100 ist in Fig. 5 angedeutet, dass ebenfalls der Bodenbereich 18 des Behälters 10 einer optischen Prüfung unterzogen werden kann. Dafür kann der Behälter 10 von dem Förderband 31 durch geeignete Mittel, z.B. Greifmittel, abgehoben werden, so dass der Bodenbereich 18 einer optischen Prüfung entsprechender Inspektionseinheit 40 zugänglich ist.

## Patentansprüche

1. Verfahren zur optischen Prüfung von Hohlkörpern, in welchem ein Hohlkörper (10) mittels einer Transporteinrichtung (30) mit einer Transportgeschwindigkeit befördert wird, wobei mittels einer Inspektionseinheit (40), umfassend mindestens eine Kameraeinheit (20) und mindestens eine Beleuchtungseinheit (34), ein Abbild von einer Seitenwandfläche des Hohlkörpers (10) erzeugt wird, wobei
mehrere Inspektionseinheiten (40) angeordnet und nacheinander aktivierbar sind, so dass ein Inspektionsvolumen (24) aufspannbar ist, in welchem ein Abbild der gesamten Seitenwandfläche (26) des Hohlkörpers (10) sowie eines Boden- und eines Mündungsbereichs in einem Durchlichtverfahren, einem Auflichtverfahren und/oder einem Dunkelfeldverfahren erzeugt wird, wobei jeweils eine Kameraeinheit (20) der Inspektionseinheiten (40) eingerichtet ist, um eine serielle Abfolge von Aufnahmen in jeweils einer Zeitspanne aufzunehmen, welche bei einer gegebenen Transportgeschwindigkeit eine Strecke ausmacht, welche einem Bruchteil der Behältergrösse entspricht, und **dadurch gekennzeichnet, dass**
die mindestens eine Kameraeinheit (20) als eine Zeilenkamera ausgebildet ist.

2. Verfahren nach Anspruch 1, **dadurch gekennzeichnet, dass** vier Inspektionseinheiten (40a, 40b, 40c, 40d) ein weitgehend quaderförmiges Inspektionsvolumen (24) aufspannen, wobei optische Achsen (42a, 42c; 42b, 42d) im Wesentlichen diagonal gegenüberliegender Inspektionseinheiten (40a, 40c; 40b, 40d) auf einer Linie oder versetzt zueinander liegen.

3. Verfahren nach einem der Ansprüche 1 oder 2, **dadurch gekennzeichnet, dass** die Längsachse der Zeilenkamera parallel zur Längsachse (11) des Hohlkörpers (10) ausgerichtet ist.

4. Verfahren nach einem der Ansprüche 1 bis 3, **dadurch gekennzeichnet, dass** jede Inspektionseinheit (40) eine Beleuchtungseinheit (34) zur Beleuchtung des Hohlkörpers (10) umfasst, welche eingerichtet ist, um Licht in Form eines Lichtstreifens parallel zur Längsachse (11) des Hohlkörpers (10) zu emittieren.

5. Verfahren nach einem der Ansprüche 1 bis 4, **dadurch gekennzeichnet, dass** Kameraeinheit (20) und Beleuchtungseinheit (34) einer Inspektionseinheit (40) derart zueinander positioniert und aktivierbar sind, dass der Hohlkörper (10) im Inspektionsvolumen (24) im Auflichtverfahren prüfbar ist.

6. Verfahren nach einem der Ansprüche 1 bis 4, **dadurch gekennzeichnet, dass** Kameraeinheit (20) und Beleuchtungseinheit (34) gegenüberliegender Inspektionseinheiten (40) derart zueinander positioniert und aktivierbar sind, dass der Hohlkörper (10) im Inspektionsvolumen (24) im Durchlichtverfahren prüfbar ist.

7. Verfahren nach einem der vorhergehenden Ansprüche, **dadurch gekennzeichnet, dass** im Strahlengang des Lichts einer Inspektionseinheit (40) ein Filterelement (36) angeordnet ist.

8. Verfahren nach Anspruch 7, **dadurch gekennzeichnet, dass** das Filterelement (36) ein Polarisationsfilter ist.

9. Verfahren nach einem der vorhergehenden Ansprüche, **dadurch gekennzeichnet, dass** der Hohlkörper (10) mit weiteren Inspektionseinheiten (40) zur Prüfung eines Gewindebereichs (12) geprüft wird, wobei die Kameraeinheit (20) eine telezentrische Optik und/oder die Beleuchtungseinheit (34) umfasst, konfiguriert für eine telezentrische Beleuchtung.

10. Verfahren nach einem der vorhergehenden Ansprüche, **dadurch gekennzeichnet, dass** der Hohlkörper (10) mittels einer Inspektionseinheit (40) zur Prüfung der Kontur und von Butzen geprüft wird.

11. Verfahren nach einem der vorhergehenden Ansprüche, **dadurch gekennzeichnet, dass** der Hohlkörper (10) mittels einer Infrarot-Inspektionseinheit geprüft wird.

12. Vorrichtung (100) zur optischen Prüfung von Hohlkörpern (10), umfassend eine Transporteinrichtung (20) zur Beförderung der Hohlkörper (10), mindestens eine Inspektionseinheit (40), wobei die Inspektionseinheit (40) mindestens eine Kameraeinheit (20) und mindestens eine Beleuchtungseinheit (34) umfasst zur Abbildung einer Seitenwandfläche des Hohlkörpers (10), wobei
die Vorrichtung (100) derart konfiguriert ist, dass sie mehrere nacheinander aktivierbare Inspektionseinheiten (40) umfasst, so dass die gesamte Seitenwandfläche (26) des Hohlkörpers (10) sowie ein Boden- und ein Mündungsbereich mittels der Inspektionseinheiten (40) im Durchlicht-, Auflicht- und/oder Dunkelfeldverfahren abbildbar ist, und wobei jeweils eine Kameraeinheit (20) der Inspektionseinheiten (40) eingerichtet ist, um eine serielle Abfolge von Aufnahmen in jeweils einer Zeitspanne aufzunehmen, welche bei einer gegebenen Transportgeschwindigkeit eine Strecke ausmacht, welche einem Bruchteil der Behältergrösse entspricht, und **dadurch gekennzeichnet, dass**
die mindestens eine Kameraeinheit (20) als eine Zeilenkamera ausgebildet ist.

13. Vorrichtung (100) nach Anspruch 12, **dadurch gekennzeichnet, dass** jede Inspektionseinheit (40) die Kameraeinheit (20), die Beleuchtungseinheit (34) und mindestens ein Filterelement (36) umfasst, die zueinander positioniert und konfiguriert sind, um im Auflichtverfahren den Hohlkörper (10) zu prüfen.

14. Vorrichtung (100) nach einem der Ansprüche 12 oder 13, **dadurch gekennzeichnet, dass** mehrere Inspektionseinheiten (40) derart zueinander positioniert und konfiguriert sind, um den Hohlkörper (10) im Durchlichtverfahren zu prüfen.

15. Vorrichtung (100) nach einem der Ansprüche 12 bis 14, **dadurch gekennzeichnet, dass** eine Längsachse der Zeilenkamera parallel zur Längsachse (11) des Hohlkörpers (10) ausgerichtet ist.

16. Vorrichtung (100) nach Anspruch 15, **dadurch gekennzeichnet, dass** eine Breite des Sensors der Zeilenkamera mindestens gleich der Länge des Hohlkörpers (10) ist.

17. Vorrichtung (100.) nach einem der Ansprüche 12 bis 16, **dadurch gekennzeichnet, dass** die Beleuchtungseinheit (34) eingerichtet ist, um Licht in Form eines Lichtstreifens entsprechend einer Länge des Hohlkörpers (10) parallel zur Längsachse (11) des Hohlkörpers (10) zu emittieren.

18. Vorrichtung (100) nach einem der Ansprüche 12 bis 17, **dadurch gekennzeichnet, dass** im Strahlengang des von der Beleuchtungseinheit (34) emittierten Lichts ein Filterelement (36) angeordnet ist.

19. Vorrichtung (100) nach Anspruch 18, **dadurch gekennzeichnet, dass** das Filterelement (36) ein Polarisationsfilter ist.

20. Vorrichtung (100) nach Anspruch 12, **dadurch gekennzeichnet, dass** eines der Inspektionseinheiten (40) eine Kameraeinheit (20) mit telezentrischer Optik und/oder eine Beleuchtungseinheit (34) umfassen, konfiguriert für eine telezentrische Beleuchtung.

21. Vorrichtung (100) nach Anspruch 20, **dadurch gekennzeichnet, dass** eine der weiteren Inspektionseinheiten (40) als eine Infrarot-Inspektionseinheit konfiguriert ist, um den Hohlkörper (10) mittels Infrarotstrahlung zu prüfen.

## Claims

1. Method for optical testing of hollow bodies, in which a hollow body (10) is conveyed by means of a transport device (30) at a transport speed, whereby an image of a side wall surface of the hollow body (10) is generated by means of an inspection unit (40) comprising at least one camera unit (20) and at least one illumination unit (34), whereby
a plurality of inspection units (40) are arranged and are able to be activated one after the other, so that an inspection volume (24) is able to be spanned, in which an image of the entire side wall surface (26) of the hollow body (10) as well as a bottom and a mouth region is generated in a transmitted light method, an incident light method and/or a dark field method, whereby each camera unit (20) of the inspection units (40) is arranged to capture a serial sequence of images in each case over a period of time, which, at a given transport speed, corresponds to a distance equivalent to a fraction of the container size, and **characterized in that**
the at least one camera unit (20) is designed as a line scan camera.

2. Method according to claim 1, **characterized in that** four inspection units (40a, 40b, 40c, 40d) span a largely cuboid inspection volume (24), whereby optical axes (42a, 42c; 42b, 42d) of substantially diagonally opposite inspection units (40a, 40c; 40b, 40d) lie on a line or offset from one another.

3. Method according to one of the claims 1 or 2, **characterized in that** the longitudinal axis of the line scan camera is aligned parallel to the longitudinal axis (11) of the hollow body (10).

4. Method according to one of the claims 1 to 3, **characterized in that** each inspection unit (40) comprises an illumination unit (34) for illumination of the hollow body (10), which is arranged to emit light in the form of a light strip parallel to the longitudinal axis (11) of the hollow body (10).

5. Method according to one of the claims 1 to 4, **characterized in that** camera unit (20) and illumination unit (34) of an inspection unit (40) are positioned relative to one another and are able to be activated in such a way that the hollow body (10) in the inspection volume (24) is able to be inspected using the incident light method.

6. Method according to one of the claims 1 to 4, **characterized in that** camera unit (20) and illumination unit (34) of opposite inspection units (40) are positioned relative to one another and are able to be activated in such a way that the hollow body (10) in the inspection volume (24) is able to be inspected using the transmitted light method.

7. Method according to one of the preceding claims, **characterized in that** a filter element (36) is arranged in the beam path of the light of an inspection unit (40).

8. Method according to claim 7, **characterized in that** the filter element (36) is a polarizing filter.

9. Method according to one of the preceding claims, **characterized in that** the hollow body (10) is inspected with further inspection units (40) for inspecting a threaded area (12), the camera unit (20) comprising telecentric optics and/or the illumination unit (34) configured for telecentric illumination.

10. Method according to one of the preceding claims, **characterized in that** the hollow body (10) is inspected by means of an inspection unit (40) for checking the contour and checking for slugs.

11. Method according to one of the preceding claims, **characterized in that** the hollow body (10) is inspected by means of an infrared inspection unit.

12. Device (100) for optically testing hollow bodies (10), comprising a transport device (20) for conveying the hollow body (10), <and> at least one inspection unit (40), whereby the inspection unit (40) comprises at least one camera unit (20) and at least one illumination unit (34) for imaging a side wall surface of the hollow body (10), whereby
the device (100) is configured such that it comprises a plurality of inspection units (40) which are able to be activated in succession, so that the entire side wall surface (26) of the hollow body (10), as well as a bottom and a mouth region, are able to be imaged by means of the inspection units (40) using transmitted light, incident light and/or dark-field methods, and whereby each camera unit (20) of the inspection units (40) is configured to capture a serial sequence of images, each within a time interval which, at a given transport speed, corresponds to a distance equivalent to a fraction of the container size, and **characterized in that**
the at least one camera unit (20) is designed as a line scan camera.

13. Device (100) according to claim 12, **characterized in that** each inspection unit (40) comprises the camera unit (20), the illumination unit (34) and at least one filter element (36), positioned and configured relative to one another in order to inspect the hollow body (10) in the incident light method.

14. Device (100) according to one of the claims 12 or 13, **characterized in that** a plurality of inspection units (40) are positioned and configured relative to one another in order to inspect the hollow body (10) in the transmitted light method.

15. Device (100) according to one of the claims 12 to 14, **characterized in that** a longitudinal axis of the line scan camera is aligned parallel to the longitudinal axis (11) of the hollow body (10).

16. Device (100) according to claim 15, **characterized in that** a width of the sensor of the line scan camera is at least equal to the length of the hollow body (10).

17. Device (100) according to one of the claims 12 to 16, **characterized in that** the illumination unit (34) is arranged to emit light in the form of a light strip corresponding to a length of the hollow body (10) parallel to the longitudinal axis (11) of the hollow body (10).

18. Device (100.) according to one of the claims 12 to 17, **characterized in that** a filter element (36) is arranged in the beam path of the light emitted from the illumination unit (34).

19. Device (100) according to claim 18, **characterized in that** the filter element (36) is a polarizing filter.

20. Device (100) according to claim 12, **characterized in that** one of the inspection units (40) comprises a camera unit (20) with telecentric optics and/or an illumination unit (34) configured for telecentric illumination.

21. Device (100) according to claim 20, **characterized in that** one of the further inspection units (40) is configured as an infrared inspection unit for inspecting the hollow body (10) by means of infrared radiation.

## Revendications

1. Procédé d'inspection optique de corps creux, dans lequel un corps creux (10) est transporté à une certaine vitesse à l'aide d'un dispositif de transport (30), une image d'une surface de paroi latérale du corps creux (10) étant générée à l'aide d'une unité d'inspection (40), comprenant au moins une unité de caméra (20) et au moins une unité d'éclairage (34),
plusieurs unités d'inspection (40) étant disposées et pouvant être activées successivement, de telle sorte qu'un volume d'inspection (24) puisse être défini, dans lequel une image de l'ensemble de la surface de paroi latérale (26) du corps creux (10) ainsi que d'une zone de fond et d'une zone d'embouchure est générée selon un procédé d'éclairage par transparence, un procédé d'éclairage par réflexion et/ou un procédé en champ sombre, une unité de caméra (20) respectivement des unités d'inspection (40) étant configurée pour enregistrer une séquence d'images successives au cours d'un intervalle de temps qui, à une vitesse de transport donnée, correspond à une distance équivalente à une fraction de la taille du récipient, et **caractérisé en ce que**
ladite au moins une unité de caméra (20) est conçue comme une caméra linéaire.

2. Procédé selon la revendication 1, **caractérisé en ce que** quatre unités d'inspection (40a, 40b, 40c, 40d) délimitent un volume d'inspection (24) sensiblement parallélépipédique, les axes optiques (42a, 42c ; 42b, 42d) d'unités d'inspection (40a, 40c ; 40b, 40d) sensiblement diagonales et opposées se trouvant sur une même ligne ou étant décalées les unes par rapport aux autres.

3. Procédé selon l'une des revendications 1 ou 2, **caractérisé en ce que** l'axe longitudinal de la caméra linéaire est aligné parallèlement à l'axe longitudinal (11) du corps creux (10).

4. Procédé selon l'une des revendications 1 à 3, **caractérisé en ce que** chaque unité d'inspection (40) comprend une unité d'éclairage (34) destinée à éclairer le corps creux (10), laquelle est agencée pour émettre de la lumière sous la forme d'une bande lumineuse parallèle à l'axe longitudinal (11) du corps creux (10).

5. Procédé selon l'une des revendications 1 à 4, **caractérisé en ce que** l'unité de caméra (20) et l'unité d'éclairage (34) d'une unité d'inspection (40) étant positionnées l'une par rapport à l'autre et pouvant être activées de telle sorte que le corps creux (10) puisse être contrôlé dans le volume d'inspection (24) selon le procédé d'éclairage incident.

6. Procédé selon l'une des revendications 1 à 4, **caractérisé en ce que** l'unité de caméra (20) et l'unité d'éclairage (34) d'unités d'inspection (40) situées en vis-à-vis sont positionnées l'une par rapport à l'autre et peuvent être activées de telle sorte que le corps creux (10) puisse être contrôlé dans le volume d'inspection (24) par le procédé d'éclairage par transparence.

7. Procédé selon l'une des revendications précédentes, **caractérisé en ce qu'**un élément filtrant (36) est disposé dans le trajet optique d'une unité d'inspection (40).

8. Procédé selon la revendication 7, **caractérisé en ce que** l'élément filtrant (36) est un filtre polarisant.

9. Procédé selon l'une des revendications précédentes, **caractérisé en ce que** le corps creux (10) est inspecté à l'aide d'autres unités d'inspection (40) destinées à contrôler une zone filetée (12), l'unité de caméra (20) comprenant une optique télécentrique et/ou l'unité d'éclairage (34) étant configurée pour un éclairage télécentrique.

10. Procédé selon l'une des revendications précédentes, **caractérisé en ce que** le corps creux (10) est contrôlé à l'aide d'une unité d'inspection (40) destinée à vérifier son contour et la présence de bavures.

11. Procédé selon l'une des revendications précédentes, **caractérisé en ce que** le corps creux (10) est contrôlé à l'aide d'une unité d'inspection infrarouge.

12. Dispositif (100) destiné au contrôle optique de corps creux (10), comprenant un dispositif de transport (20) destiné à acheminer les corps creux (10), au moins une unité d'inspection (40), ladite unité d'inspection (40) comprenant au moins une unité de caméra (20) et au moins une unité d'éclairage (34) pour reproduire une surface de paroi latérale du corps creux (10),
le dispositif (100) étant configuré de telle sorte qu'il comprend plusieurs unités d'inspection (40) pouvant être activées successivement, de sorte que l'ensemble de la surface de la paroi latérale (26) du corps creux (10) ainsi qu'une zone de fond et une zone d'embouchure puissent être représentées au moyen des unités d'inspection (40) selon les procédés de la lumière transmise, de la lumière incidente et/ou du champ sombre, et chacune des unités d'inspection (40) étant équipée d'une unité de caméra (20) agencée pour enregistrer une séquence d'images successives au cours d'un intervalle de temps correspondant, à une vitesse de transport donnée, à une distance équivalente à une fraction de la taille du récipient, et **caractérisé en ce que**
ladite au moins une unité de caméra (20) est conçue comme une caméra linéaire.

13. Dispositif (100) selon la revendication 12, **caractérisé en ce que** chaque unité d'inspection (40) comprend l'unité de caméra (20), l'unité d'éclairage (34) et au moins un élément filtrant (36), qui sont positionnés les uns par rapport aux autres et configurés de manière à contrôler le corps creux (10) selon le procédé d'éclairage par réflexion.

14. Dispositif (100) selon l'une des revendications 12 ou 13, **caractérisé en ce que** plusieurs unités d'inspection (40) sont positionnées et configurées les unes par rapport aux autres de manière à contrôler le corps creux (10) selon le procédé d'éclairage par transparence.

15. Dispositif (100) selon l'une des revendications 12 à 14, **caractérisé en ce qu'**un axe longitudinal de la caméra linéaire est aligné parallèlement à l'axe longitudinal (11) du corps creux (10).

16. Dispositif (100) selon la revendication 15, **caractérisé en ce que** la largeur du capteur de la caméra linéaire est au moins égale à la longueur du corps creux (10).

17. Dispositif (100.) selon l'une des revendications 12 à 16, **caractérisé en ce que** l'unité d'éclairage (34) est agencée pour émettre de la lumière sous la forme d'une bande lumineuse correspondant à la longueur du corps creux (10), parallèlement à l'axe longitudinal (11) du corps creux (10).

18. Dispositif (100) selon l'une des revendications 12 à 17, **caractérisé en ce qu'**un élément filtrant (36) est disposé dans le trajet optique de la lumière émise par l'unité d'éclairage (34).

19. Dispositif (100) selon la revendication 18, **caractérisé en ce que** l'élément filtrant (36) est un filtre polarisant.

20. Dispositif (100) selon la revendication 12, **caractérisé en ce que** l'une des unités d'inspection (40) comprend une unité de caméra (20) dotée d'une optique télécentrique et/ou une unité d'éclairage (34) configurée pour un éclairage télécentrique.

21. Dispositif (100) selon la revendication 20, **caractérisé en ce que** l'une des autres unités d'inspection (40) est configurée comme une unité d'inspection infrarouge afin de contrôler le corps creux (10) à l'aide d'un rayonnement infrarouge.
